# FASCICULE DE BREVET EUROPEEN

(11) **EP 2 944 614 B1**
(45) Date de publication et mention de la délivrance du brevet: **28.12.2016**
(21) Numéro de dépôt: 15167189.8
(22) Date de dépôt: 11.05.2015
(51) Int. Cl.: C02F 1/48

(54) **PROCÉDÉ ET APPAREIL DE TRAITEMENT DU TARTRE DANS UNE CANALISATION**
VERFAHREN UND GERÄT ZUR BEHANDLUNG VON KALKANSAMMLUNGEN IN EINER ROHRLEITUNG
METHOD AND APPARATUS FOR TREATING SCALE IN A PIPELINE

(30) Priorité: 12.05.2014 FR 1454212
(43) Date de publication de la demande: 18.11.2015
(73) Titulaire: Cappello, Pietro, 98000 Monaco (MC)
(72) Inventeur: Cappello, Pietro, 98000 Monaco (MC)
(74) Mandataire: Chevalier, Renaud Philippe

(56) Documents cités:
- WO-A1-97/14654
- WO-A1-2006/072125
- DE-A1- 4 229 594
- DE-A1- 4 302 160
- US-A- 4 299 701

## Description

La présente invention se rapporte à un procédé de traitement du tartre dans une canalisation de circulation d'un liquide, et à un système de traitement associé.

Elle se rapporte plus particulièrement à un procédé de traitement dans lequel est généré un champ magnétique agissant sur le tartre au moyen d'au moins une bobine électrique montée à l'extérieur de la canalisation et parcourue par un courant électrique de commande.

L'invention se situe dans le domaine du traitement du tartre dans des canalisations de circulation d'eau, et en particulier d'eau chaude sanitaire, sans pour autant être limitée à une telle utilisation.

Dans le domaine du traitement du tartre, il est connu d'agir sur les dépôts de tartre par application d'un champ magnétique qui agit sur les ions en vue de lutter contre le dépôt de tartre et ainsi offrir une action préventive, l'application d'un tel champ pouvant conduire jusqu'à l'élimination du tartre déjà présent et ainsi offrir une action curative.

Ce procédé connu consiste à placer au moins une bobine électrique, ou solénoïde, autour de la canalisation et à faire un circuler dans la bobine un courant électrique (ou intensité) généralement de forme carrée, périodique, afin de délivrer au liquide une puissance électromagnétique constante.

Cette solution à puissance électromagnétique constante présente l'inconvénient que, lorsque la canalisation est fortement entartrée, il est nécessaire de traiter avec une forte puissance électromagnétique, et donc d'employer un appareil de forte puissance, afin de produire l'action curative souhaitée de retrait du tartre. DE-A-4302160 divulgue le détartrage électromagnétique de l'eau circulant dans une canalisation. Une bobine d'induction est enroulée autour de la canalisation et un courant électrique est appliqué ce qui génère un champ magnétique dans l'eau. Comme l'intensité du champ magnétique est variée périodiquement il y a forcément des séquences qui comprennent successivement une phase dans laquelle la puissance électromagnétique est maximale et une phase dans laquelle la puissance électromagnétique est minimale.

Or, le Demandeur a observé qu'un traitement de forte puissance utilisé de façon continue provoque des décollements de grosses particules de tartre qui risquent de colmater en aval des points ou orifices de prélèvement d'eau sur la canalisation, et en particulier des vannes ou robinets. A titre d'exemple, ces grosses particules de tartre peuvent endommager ou colmater les mousseurs ou aérateurs de robinet, les cartouches céramiques ou pistons de robinet et les filtres d'installation d'eau.

En outre, une fois le tartre retiré et donc la canalisation assainie, ce traitement avec une forte puissance électromagnétique s'avère trop puissant pour assurer une action préventive qui vise à éviter la formation du tartre. Il est donc alors nécessaire de remplacer l'appareil à forte puissance par un appareil à plus faible puissance, afin d'éviter une consommation électrique superflue. L'installation de ce nouvel appareil de moindre puissance impose donc une opération de remplacement par un opérateur qualifié, impliquant des coûts et du temps de travail parfois rédhibitoires.

La présente invention a pour but de résoudre en tout ou partie les inconvénients précités, en proposant un procédé de traitement du tartre qui permet de fonctionner avec un seul appareil de traitement qui assure à la fois un traitement curatif dès l'installation, tout en évitant des décollements de trop grosses particules de tartre, et ensuite un traitement préventif, pour éviter la reformation de tartre, sans pour autant entraîner des surconsommations électriques.

A cet effet, elle propose un procédé de traitement du tartre dans une canalisation de circulation d'un liquide, dans lequel est généré un champ magnétique agissant sur le tartre au moyen d'au moins une bobine électrique montée à l'extérieur de la canalisation et parcourue par un courant électrique de commande, ledit procédé consistant à faire varier le courant électrique de commande pour faire varier la puissance électromagnétique délivrée au liquide selon au moins une série de plusieurs séquences répétitives, chaque séquence comprenant successivement :
- une première phase, sur un premier intervalle de temps, dans laquelle la puissance électromagnétique est égale à un seuil maximal ;
- une seconde phase, sur un second intervalle de temps, dans laquelle la puissance électromagnétique est égale à un seuil minimal ;
ledit procédé étant remarquable en ce qu'il met en oeuvre plusieurs séries successives, avec un abaissement de la valeur du seuil maximal pour les premières phases lorsqu'on passe d'une série à une série suivante.

Ainsi, le procédé selon l'invention propose, lors de chaque série, d'alterner :
- des premières phases dites de pleine puissance permettant de provoquer le décollement du tartre accumulé ; et
- des secondes phases dites de puissance réduite permettant l'évacuation des particules ou résidus de tartre décollés avant que d'autres ne se cumulent, tout en maintenant une puissance suffisante pour procurer l'efficacité minimale empêchant que le tartre ne se reforme.

Ainsi, le traitement à pleine puissance ne se fait pas de manière continue, ce qui évite le décollement de trop grosses particules de tartre et donc un colmatage en aval.

En outre, grâce à l'invention, et comme décrit ultérieurement, le procédé propose d'abaisser le seuil maximal des premières phases au fur et à mesure du temps, pour atteindre un régime final classique avec une puissance minimale constante qui remplira un rôle préventif. Autrement dit, le procédé met en oeuvre les séries successives suivantes :
- une première série avec un seuil maximal pour les premières phases des séquences qui est fixé à une valeur initiale Pboost ;
- une deuxième série avec un seuil maximal pour les premières phases des séquences qui est fixé à une valeur P2 inférieure à la valeur initiale Pboost ;
- une troisième série avec un seuil maximal pour les premières phases des séquences qui est fixé à une valeur P3 inférieure à la valeur P2 de la deuxième série ;
et ainsi de suite en abaissant à chaque fois la valeur du seuil maximal pour les premières phases lorsqu'on passe d'une série à une série suivante.

Bien entendu, la durée d'une série est supérieure à la durée d'une séquence (chaque séquence comprenant pour rappel une première phase de pleine puissance suivie d'une seconde phases de puissance réduite), avec par exemple des séries qui s'étendent chacune sur au moins un jour, voire sur plusieurs jours jusqu'à par exemple environ un mois, et des séquences qui s'étendent chacune sur au moins une heure, voire sur plusieurs heures.

Selon une caractéristique, lors de la ou de chaque série, la puissance électromagnétique présente une forme de signal rectangulaire avec une alternance de premières phases dans lesquelles la puissance électromagnétique est égale au seuil maximal et de secondes phases dans lesquelles la puissance électromagnétique est égale au seuil minimal

Selon une autre caractéristique, le rapport entre le premier intervalle de temps et le second intervalle de temps est compris entre 0,6 et 1,4, de préférence entre 0,8 et 1,2, et encore de préférence est égal à 1

Ainsi, au sein d'une série, les premières phases sont sensiblement aussi longues en durée que les secondes phases, voire de même durée lorsque le rapport précité est égal à 1.

Dans une réalisation particulière, les séquences sont répétées de manière périodique sur la ou chaque série.

Ainsi, la ou chaque série de traitement présente une périodicité dans l'alternance des premières et secondes phases.

Avantageusement, le procédé met en oeuvre plusieurs séries successives, avec un abaissement de la valeur du seuil maximal pour les premières phases lorsqu'on passe d'une série à une série suivante.

Dans un mode de réalisation particulier, la valeur du seuil maximal pour les premières phases est abaissée en passant d'une série à une série suivante jusqu'à atteindre la valeur du seuil minimal, de sorte que ces séries successives sont suivies d'une phase terminale dans laquelle la puissance délivrée reste constante et égale à la valeur du seuil minimal.

Autrement dit, on part d'une première série avec un seuil maximal équivalent à la valeur initiale Pboost, puis on abaisse ce seuil maximal pour chaque série suivante jusqu'à atteindre une dernière série avec un seuil qui est fixé à la valeur du seuil minimal Pnom (cette dernière série correspondant à la phase terminale précitée).

Ainsi, le procédé fait varier la puissance des premières phases (c'est-à-dire la pleine puissance d'une série) entre le jour du démarrage du procédé de traitement et le jour où la canalisation est considérée comme assainie. La puissance globale délivrée est donc élevée au début (avec des premières phases de forte puissance) et va ensuite décroître d'une série à l'autre, au fil du temps, jusqu'à atteindre le seuil minimal qui correspond à une valeur minimale préconisée pour un entretien durable et préventif de la canalisation, avec une puissance électrique consommée minimisée.

Selon une possibilité de l'invention, chaque série est réalisée sur une même durée.

Selon une autre possibilité de l'invention, la ou chaque série dure entre un jour et plusieurs jours, de préférence entre 10 et 50 jours, et encore de préférence entre 20 et 40 jours.

Ainsi, on peut réaliser sur au moins un jour une série avec une alternance de premières phases (avec un seuil maximal donné) et de secondes phases (avec le seuil minimal donné), puis on réalise sur au moins un jour une nouvelle série avec une alternance de premières phases (avec un seuil maximal abaissé par rapport à la série précédente) et de secondes phases (avec le même seuil minimal donné), et ainsi de suite.

Conformément à une autre caractéristique avantageuse de l'invention, le courant électrique de commande est un signal rectangulaire, notamment un signal de fréquence variable comprise entre 500 Hz et 11 kHz, alternant entre un seuil haut et un seuil bas.

Dans une première réalisation, pour la ou chaque série, le courant électrique de commande présente un rapport cyclique qui varie entre la première phase et la seconde phase, avec un rapport cyclique durant la première phase supérieur au rapport cyclique durant la seconde phase, et d'une série à une série suivante, le rapport cyclique durant les premières phases diminue.

Pour complément d'information, le rapport cyclique d'un signal rectangulaire correspond au rapport entre la période où le signal est haut (seuil haut) et la période totale du signal. Si ce rapport cyclique est équivalent à 0,5, alors le signal est carré. Dans cette première réalisation, on fait varier la puissance électromagnétique délivrée entre les premières et secondes phases en jouant sur le rapport cyclique du signal rectangulaire du courant électrique de commande.

Ainsi, durant les secondes phases, le rapport cyclique est par exemple compris entre 0,05 et 0,3, notamment entre 0,1 et 0,2, pour avoir une basse puissance équivalente au seuil minimal. Par contre, durant les premières phases de la première série (au démarrage du procédé), le rapport cyclique est par exemple compris entre 0,6 et 1, notamment entre 0,7 et 0,9, pour avoir une forte puissance équivalente à la valeur initiale Pboost.

Ensuite, d'une série à une série suivante, le rapport cyclique durant les premières phases diminue. De cette manière, au fur et à mesure que l'on avance dans les séries, le rapport cyclique durant les premières phases diminue pour que le seuil maximal de la puissance électromagnétique diminue.

Dans une seconde réalisation, pour la ou chaque série, le courant électrique de commande présente un seuil haut qui varie entre la première phase et la seconde phase, avec un seuil haut durant la première phase supérieur au seuil haut durant la seconde phase, et d'une série à une série suivante, le seuil haut durant les premières phases diminue.

Dans cette seconde réalisation, on fait varier la puissance électromagnétique délivrée entre les premières et secondes phases en jouant sur le seuil haut du signal rectangulaire du courant électrique de commande.

Ainsi, durant les premières phases de la première série (au démarrage du procédé), le seuil haut est équivalent à Imax pour avoir une forte puissance équivalente à la valeur Pboost. Par contre, durant les secondes phases de la chaque série, le seuil haut est équivalent à Imin, qui est par exemple compris entre 0,05.Imax et 0,3.Imax, notamment entre 0,1.Imax et 0,2.Imax, pour avoir une basse puissance équivalente au seuil minimal.

Ensuite, d'une série à une série suivante le seuil haut durant les premières phases diminue. De cette manière, au fur et à mesure que l'on avance dans les séries, le seuil haut durant les premières phases diminue pour que le seuil maximal de la puissance électromagnétique diminue.

La présente invention concerne également la caractéristique selon laquelle le procédé comprend en outre une étape de mesure de la température contre la canalisation, suivie d'une étape de génération d'une alarme si la température mesurée sort d'une plage de température prédéfinie.

La mesure de cette température est de préférence réalisée au moyen d'une sonde de température placée contre la surface extérieure de la canalisation, et éventuellement maintenue en place au moyen des spires de la bobine. Cette mesure de la température permet donc la génération d'une alarme sur la température ; cette température étant primordiale dans les installations à eau chaude sanitaire pour traduire la qualité de l'eau.

Dans une réalisation particulière, le procédé comprend en outre :
- une étape de mesure de mesure d'au moins un paramètre intrinsèque du liquide circulant dans la canalisation, choisi dans la liste de paramètres comprenant la température du liquide, la dureté du liquide (autrement appelée titre hydrotimétrique), le pH du liquide, le taux de chlore dans le liquide, le débit de circulation du liquide, la pression du liquide, et la conductivité du liquide ; et
- une étape de variation de la puissance électromagnétique en fonction de la mesure d'au moins un paramètre intrinsèque.

Ainsi, le procédé permet de jouer sur la puissance électromagnétique appliquée par la ou les bobines en fonction d'au moins un paramètre intrinsèque caractéristique du liquide.

Selon une possibilité, un paramètre intrinsèque correspond à la température de l'eau, et l'étape de variation consiste à augmenter le seuil maximal de la puissance électromagnétique lorsque ladite température augmente ou dépasse un seuil de température prédéfini.

Selon une autre possibilité, un paramètre intrinsèque correspond à la dureté du liquide, et l'étape de variation consiste à faire varier la fréquence du signal rectangulaire du courant électrique de commande sur plusieurs périodes successives, en augmentant la fréquence ou gamme de fréquences d'une période à la suivante, puis à recaler la fréquence ou gamme de fréquences dudit signal rectangulaire sur celle correspondant à la période où la dureté du liquide est maximale.

Ainsi, ces périodes reviennent à mettre en place un mode de calibrage automatique qui va permettre de sélectionner la fréquence ou gamme de fréquences qui offre le meilleur résultat ; le meilleur résultat de détartrage correspondant en effet à la dureté maximale.

L'invention se rapporte également à un appareil de traitement du tartre dans une canalisation de circulation d'un liquide, comprenant :
- au moins une bobine électrique prévue pour être montée à l'extérieur de la canalisation ;
- une alimentation électrique ;
- une unité de pilotage raccordée en entrée à l'alimentation et en sortie à la ou chaque bobine, ladite unité de pilotage générant en sortie un courant électrique de commande parcourant la ou chaque bobine ;
où l'unité de pilotage comprend un module de variation du courant électrique de commande pour faire varier la puissance électromagnétique délivrée par la ou chaque bobine selon au moins une série de plusieurs séquences répétitives, chaque séquence comprenant successivement :
- une première phase, sur un premier intervalle de temps, dans laquelle la puissance électromagnétique est égale à un seuil maximal ;
- une seconde phase, sur un second intervalle de temps, dans laquelle la puissance électromagnétique est égale à un seuil minimal ;
ce système étant remarquable en ce que l'unité de pilotage est conçu pour mettre en oeuvre plusieurs séries successives, avec un abaissement de la valeur du seuil maximal pour les premières phases lorsqu'on passe d'une série à une série suivante.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique d'un appareil conforme à l'invention en place sur une canalisation ;
- la figure 2 est un graphe illustrant la variation de la puissance électromagnétique P délivrée avec un appareil conforme à l'invention en fonction du temps t, lors d'une première série au démarrage de l'appareil ;
- la figure 3 est un graphe illustrant la variation de la puissance électromagnétique P délivrée avec un appareil conforme à l'invention en fonction du temps t, lors d'une deuxième série qui suit la première série ;
- la figure 4 est un graphe illustrant la variation de la puissance électromagnétique P délivrée avec un appareil conforme à l'invention en fonction du temps t, lors d'une troisième série qui suit la deuxième série ;
- la figure 5 est un graphe illustrant la constance de la puissance électromagnétique P délivrée avec un appareil conforme à l'invention en fonction du temps t, lors d'une phase terminale qui fait suite aux séquences successives de variation de la puissance électromagnétique délivrée ;
- la figure 6 est un graphe illustrant la variation du seuil maximal Smax en fonction du temps t, série après série, jusqu'à la phase terminale ;
- la figure 7 est un graphe de variation du courant électrique de commande IC en fonction du temps t dans une première phase (en haut) et dans une seconde phase (en bas) d'une première série au démarrage de l'appareil, avec une variation de la puissance électromagnétique selon une première réalisation basée sur la variation du rapport cyclique ;
- la figure 8 est un graphe identique à celui de la figure 7 illustrant la variation du courant électrique de commande IC en fonction du temps t dans une première phase (en haut) et dans une seconde phase (en bas) d'une deuxième série qui suit la première série illustrée sur la figure 7 ;
- la figure 9 est un graphe de variation du courant électrique de commande IC en fonction du temps t dans une première phase (en haut) et dans une seconde phase (en bas) d'une première série au démarrage de l'appareil, avec une variation de la puissance électromagnétique selon une seconde réalisation basée sur la variation du seuil haut ;
- la figure 10 est un graphe identique à celui de la figure 9 illustrant la variation du courant électrique de commande IC en fonction du temps t dans une première phase (en haut) et dans une seconde phase (en bas) d'une deuxième série qui suit la première série illustrée sur la figure 10.

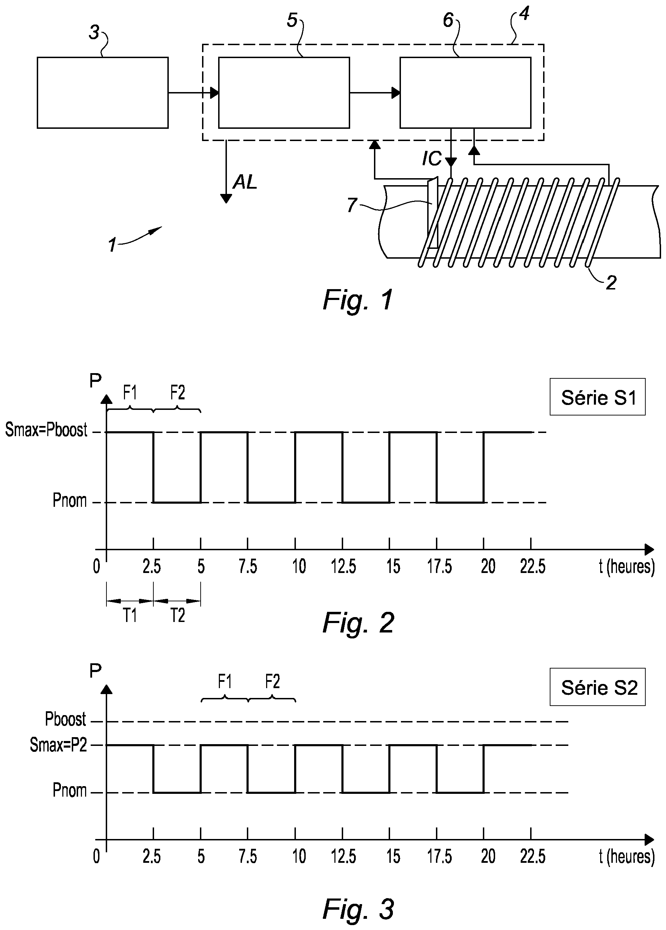

En référence à la figure 1, un appareil 1 conforme à l'invention comprend :
- une bobine électrique 2 prévue pour être montée à l'extérieur d'une canalisation C de circulation d'eau, et notamment autour de la canalisation C ;
- une alimentation 3 électrique branchée sur secteur ;
- une unité de pilotage 4 raccordée en entrée à l'alimentation 3 et en sortie à la bobine 2, cette unité de pilotage 4 générant en sortie un courant électrique de commande IC parcourant la bobine 2.

L'unité de pilotage 4 comporte un contrôleur (non illustré, notamment du type microcontrôleur ou microprocesseur) qui commande un ensemble comprenant un module de variation 5 du courant électrique de commande IC pour faire varier le courant électrique de commande IC, suivi d'un module d'amplification 6 pour amplifier le signal en sortie du module de variation 5. Le module de variation 5 assure la génération du courant avant amplification sous la forme d'un signal rectangulaire.

Le module de variation 5 est conformé pour mettre en oeuvre, sous la commande du contrôleur, le procédé conforme à l'invention, pour le traitement du tartre dans la canalisation C, en faisant varier le courant électrique de commande IC pour faire varier la puissance électromagnétique P délivrée par la bobine 2 selon plusieurs séries de traitement successives S1, S2, S3, ...., Sn (n le nombre de séries).

Chaque série de traitement se compose d'une pluralité de séquences répétitives et successives, où chaque séquence comprend successivement :
- une première phase F1, sur un premier intervalle de temps T1 donné, dans laquelle la puissance électromagnétique P est égale à un seuil maximal Smax ;
- une seconde phase F2, sur un second intervalle de temps T2 donné, dans laquelle la puissance électromagnétique P est égale à un seuil minimal Pnom.

Autrement dit, et comme visible sur les figures 2 à 4, pour chaque série, la puissance électromagnétique P présente une forme de signal rectangulaire avec une alternance de premières phases F1 dans lesquelles la puissance électromagnétique est égale au seuil maximal Smax et de secondes phases F2 dans lesquelles la puissance électromagnétique est égale au seuil minimal Pnom.

Dans chaque série, le rapport entre le premier intervalle de temps T1 et le second intervalle de temps T2 est sensiblement égal à 1, ce qui signifie que la puissance électromagnétique P présente une forme de signal carré. Il est bien entendu envisageable de travailler avec un tel rapport inférieur à 1 (premières phases plus longues que les secondes phases) ou supérieur à 1 (secondes phases plus longues que les premières phases).

La durée d'une séquence correspond à la somme du premier intervalle de temps T1 et du second intervalle de temps T2, et cette durée est de l'ordre de 3 à 6 heures, par exemple de l'ordre de 5 heures dans les figures 2 à 4.

Le procédé met en oeuvre plusieurs séries successives, avec un abaissement de la valeur du seuil maximal Smax pour les premières phases F1 lorsqu'on passe d'une série à une série suivante. Autrement dit, d'une série à l'autre, le seuil maximal Smax du signal carré (ou rectangulaire) de la puissance électromagnétique P est abaissé. Par contre, le seuil minimal Pnom reste constant d'une série à l'autre.

La figure 2 représente la variation de la puissance électromagnétique P dans une première série S1, au démarrage de l'appareil, où le seuil maximal Smax est fixé à une valeur initiale Pboost.

La figure 3 représente la variation de la puissance électromagnétique P dans une deuxième série S2, qui fait suite à la première série S1, où le seuil maximal Smax a été abaissé et est fixé à une valeur P2 inférieure à la valeur initiale Pboost de la première série S1.

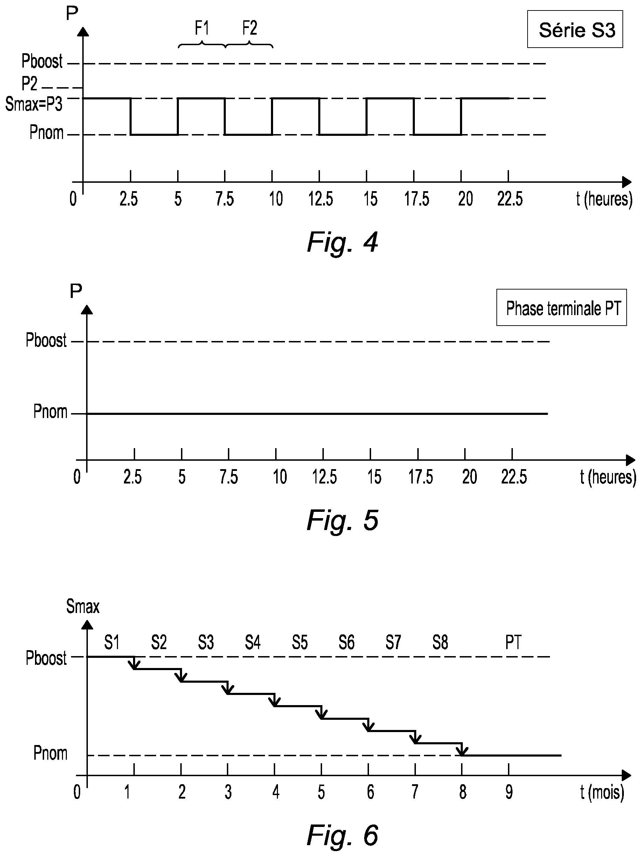

La figure 4 représente la variation de la puissance électromagnétique P dans une troisième série S3, qui fait suite à la deuxième série S2, où le seuil maximal Smax a été abaissé et est fixé à une valeur P3 inférieure à la valeur P2 de la deuxième série S2.

L'abaissement du seuil maximal Smax d'une série à l'autre peut être réalisé de manière régulière, comme illustré sur la figure 6 où sont illustrés les paliers du seuil maximal Smax pour chaque série S1 à S8 ; le graphe de la figure 6 donnant à titre d'exemple une succession de huit séries S1 à S8.

La valeur du seuil maximal Smax est abaissée, en passant d'une série à une série suivante, jusqu'à atteindre la valeur du seuil minimal Pnom, de sorte que ces séries successives sont suivies d'une phase terminale PT dans laquelle la puissance P délivrée reste constante et égale à la valeur du seuil minimal Pnom.

Ainsi, et comme illustré sur la figure 5, dans la phase terminale PT, la puissance électromagnétique P ne présente plus une forme de signal carré ou rectangulaire, mais reste constante et égale au seuil minimal Pnom.

Chaque série S1, S2, ..., Sn est réalisée sur une même durée qui est comprise entre 10 et 50 jours, et notamment de l'ordre de trente jours (soit un mois environ).

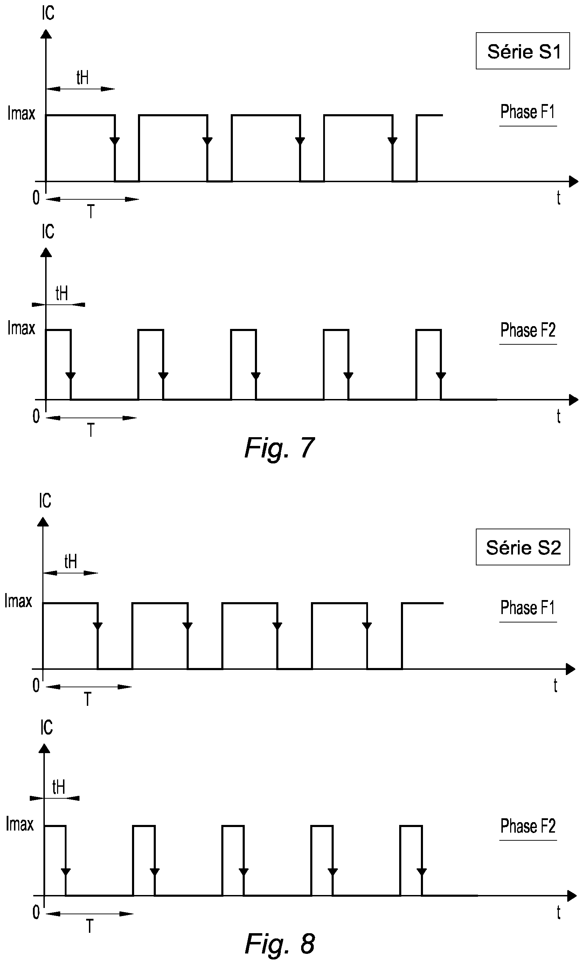

Pour obtenir un tel contrôle de la puissance électromagnétique P, le procédé fait varier le courant électrique de commande IC qui se présente sous la forme d'un signal rectangulaire, de fréquence variable comprise entre 500 Hz et 11 kHz, alternant entre un seuil haut et un seuil bas. Dans les exemples donnés à titre illustratif sur les figures 7 à 10, le seuil bas correspond à un seuil nul, mais il est bien entendu envisageable que ce seuil bas soit non nul.

Pour faire varier la puissance électromagnétique P entre les deux phases F1, F2 d'une même série, et pour faire varier le seuil maximal Smax entre deux séries consécutives, le procédé met en oeuvre l'une et/ou l'autre des deux actions suivantes :
- agir sur le rapport cyclique du signal rectangulaire du courant électrique de commande IC ;
- agir sur le seuil haut du signal rectangulaire du courant électrique de commande IC.

Dans la première réalisation, décrite en référence aux figures 7 et 8, le procédé fait varier le rapport cyclique, c'est-à-dire le rapport entre la période tH où le signal IC est haut et la période totale T du signal IC.

La figure 7 illustre la variation du signal IC durant la première série S1, où ce signal IC présente un rapport cyclique de l'ordre de 0,8 durant les premières phases F1 et un rapport cyclique de l'ordre de 0,2 durant les secondes phases F2. Ainsi, le rapport cyclique durant les premières phases F1 est supérieur au rapport cyclique durant les secondes phases F2.

Le rapport cyclique du signal IC est maximal pour les premières phases F1 de la première série S1 pour obtenir un seuil maximal Smax de la puissance électromagnétique P équivalent à la valeur Pboost.

La figure 8 illustre la variation du signal IC durant la deuxième série S2, où ce signal IC présente un rapport cyclique de l'ordre de 0,7 durant les premières phases F1 et un rapport cyclique de l'ordre de 0,2 durant les secondes phases F2. Ainsi, entre la première série S1 et la deuxième série S2, le rapport cyclique durant les premières phases F1 est abaissé (pour abaisser le seuil maximal Smax de la puissance électromagnétique P) tandis que le rapport cyclique durant les secondes phases F2 est maintenu constant (pour maintenir le seuil minimal de la puissance électromagnétique P à la valeur Pnom).

Ainsi, d'une série à une série suivante, le rapport cyclique durant les premières phases F1 diminue, jusqu'à ce que le rapport cyclique durant les premières phases F1 soit égal au rapport cyclique durant les secondes phases F2 pour être dans la phase terminale PT.

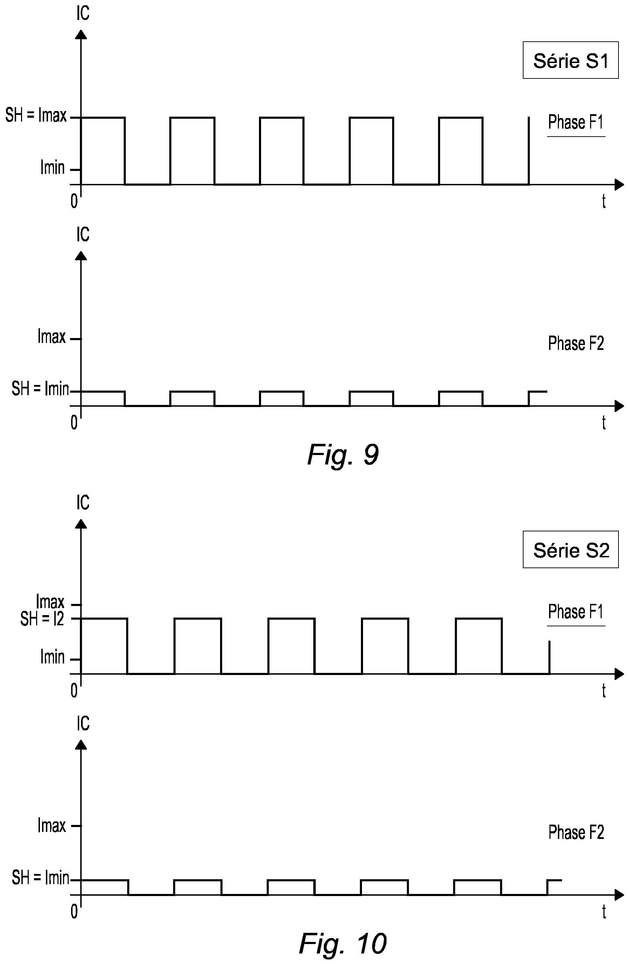

Dans la seconde réalisation, décrite en référence aux figures 9 et 10, le procédé fait varier le seuil haut du signal IC.

La figure 9 illustre la variation du signal IC durant la première série S1, où ce signal IC présente un seuil haut SH égal à une valeur maximale Imax durant les premières phases F1 et un seuil haut SH égal à une valeur minimale Imin durant les secondes phases F2. Ainsi, le seuil haut SH durant les premières phases F1 est supérieur au seuil haut SH durant les secondes phases F2.

Le seuil haut SH du signal IC est maximal pour les premières phases F1 de la première série S1 pour obtenir un seuil maximal Smax de la puissance électromagnétique P équivalent à la valeur Pboost.

La figure 10 illustre la variation du signal IC durant la deuxième série S2, où ce signal IC présente un seuil haut SH égal à une valeur I2 inférieure à Imax durant les premières phases F1 et un seuil haut SH égal à la valeur minimale Imin durant les secondes phases F2. Ainsi, entre la première série S1 et la deuxième série S2, le seuil haut SH durant les premières phases F1 est abaissé (pour abaisser le seuil maximal Smax de la puissance électromagnétique P) tandis que le seuil haut SH durant les secondes phases F2 est maintenu constant (pour maintenir le seuil minimal de la puissance électromagnétique P à la valeur Pnom).

Ainsi, d'une série à une série suivante, le seuil haut SH durant les premières phases F1 diminue, jusqu'à ce que le seuil haut SH durant les premières phases F1 soit égal au seuil haut SH durant les secondes phases F2 (autrement dit soit égal à Imin) pour être dans la phase terminale PT.

A titre d'exemple, l'appareil 1 est destiné à tout type d'installation de circulation d'eau, autant pour de l'eau chaude sanitaire d'une maison particulière que pour une piscine municipale que pour une tour aéro-réfrigérante ou un bâtiment collectif.

Bien entendu les exemples de mise en oeuvre évoqués ci-dessus ne présentent aucun caractère limitatif et d'autres améliorations et détails peuvent être apportés à l'appareil selon l'invention, sans pour autant sortir du cadre de l'invention.

A titre d'exemple, il est envisageable de prévoir une seconde bobine électrique, parcourue par un courant électrique également piloté par l'unité de pilotage 4.

Dans ce mode de réalisation avec deux bobines, l'appareil 1 comprend un second ensemble module de variation et module d'amplification, faisant varier le courant électrique de commande dans la seconde bobine pour faire varier la puissance électromagnétique délivrée par la seconde bobine.

Ce second ensemble module de variation/module d'amplification est piloté par le même contrôleur de l'unité de pilotage 4. Autrement dit, l'appareil 1 comprend deux bobines dont les actions peuvent être combinées puisqu'elles sont pilotées par un contrôleur unique. Ainsi, les deux courants électriques de commande associés aux deux bobines respectives, possèdent chacun leur propre étage de puissance et peuvent être pilotés tout à fait indépendamment, autant en fréquence (dans les mêmes gammes que précédemment) qu'en rapport cyclique et/ou qu'en amplitude.

Dans une première utilisation des deux bobines, celles-ci sont pilotées par l'unité de pilotage 4 de manière indépendante. De cette manière, les deux bobines disponibles sur l'appareil 1 sont pilotées indépendamment en courant, ce qui permet par exemple d'agir sur deux canalisations indépendantes, comme une canalisation d'eau chaude et une canalisation d'eau froide, ou bien une canalisation d'eau chaude sanitaire et une canalisation d'eau chaude de chauffage central.

Dans une seconde utilisation des deux bobines, celles-ci sont pilotées par l'unité de pilotage 4 de manière combinée, en particulier sur une même canalisation, pour traiter deux phénomènes distincts à l'intérieur de la canalisation. En effet, le procédé de détatrage selon l'invention a une influence sur le tartre ainsi que sur le biofilm accroché au tartre à l'intérieur de la canalisation. Des essais ont montré que le procédé possède une influence sur la prolifération des bactéries à l'intérieur d'installations de circulation d'eau possédant une recirculation de l'eau chaude. Ainis, il est envisageable qu'une gamme de fréquence soit plus favorable à la non-prolifération des bactéries et qu'une autre gamme de fréquence soit plus favorable au décollement du tartre. Ainsi, l'appareil 1 avec deux bobines permettra d'avoir deux bobines fonctionnant à des fréquences distinctes pour agir simultanément sur ces deux phénomènes.

A titre d'exemple, il est avantageux de prévoir que l'appareil 1 comprend une sonde 7 de mesure de la température contre la canalisation C. Cette sonde 7 est connectée à l'unité de pilotage 4 (qui est disposée à l'intérieur d'un boîtier) pour permettre notamment un affichage de la mesure de la température sur un afficheur prévu à cet effet sur le boîtier. Cette sonde 7 peut également être connectée à un module de génération d'une alarme AL si la température mesurée sort d'une plage de température prédéfinie.

La communication de l'alarme AL vers l'extérieur (par exemple à destination d'un poste de surveillance) peut être réalisée selon une voie filaire ou non filaire, comme par exemple par contact relais, ligne ethernet ou transmission radio.

De manière générale, l'appareil 1 peut comprendre une ou plusieurs sondes de mesure d'au moins un paramètre intrinsèque du liquide circulant dans la canalisation C, choisi dans la liste de paramètres comprenant, à titre non exclusif, la température du liquide (mesurée à l'intérieur ou à l'extérieur de la canalisation), la dureté du liquide (autrement appelée titre hydrotimétrique), le pH du liquide, le taux de chlore dans le liquide, le débit de circulation du liquide, la pression du liquide, et la conductivité du liquide. La ou chaque sonde de mesure d'un paramètre intrinsèque est connectée à l'unité de pilotage 4.

Selon une première possibilité, l'unité de pilotage 4 peut communiquer (selon une voie filaire ou non filaire) à l'utilisateur les données de mesure issues de la ou des sondes de mesure, à des fins d'historisation, de suivi de l'évolution, de comparaison avec des seuils bas et/ou haut, etc.

Ainsi, les données de mesure du ou des paramètres intrinsèques vont être mises à disposition de l'utilisateur, par exemple sur un terminal informatique (téléphone, tablette, ordinateur), et ces informations pourront être affichées sous forme de valeurs datées, de courbes, avec ou sans paramétrage de seuils d'alarme, de tableurs ou graphes d'historisation des données pour un suivi complet de son installation. Il serait également envisageable que ces données soient stockées sur un serveur distant, et ensuite soit mises à disposition de l'utilisateur via une connexion internet à l'extérieur de son domicile/bâtiment ou de la zone d'exploitation au sens large.

Selon une seconde possibilité, l'unité de pilotage 4 exploite les données de mesure issues de la ou des sondes de mesure, pour faire varier la puissance électromagnétique P délivrée au liquide par la ou les bobines 2.

Dans la suite de la description, trois cas de figure sont proposés pour faire varier la puissance électromagnétique P en fonction d'un paramètre intrinsèque, en l'occurrence la température du liquide, le débit de circulation du liquide, et la dureté (ou titre hydrotimétrique) du liquide.

Dans un premier cas associé à la température du liquide, il est à noter que la température de l'eau est fondamentale dans le processus de dépôt de tartre. Ainsi, l'unité de pilotage 4 peut être paramétrée pour augmenter le seuil maximal Smax lorsque la température augmente ou dépasse un seuil prédéfini ; l'augmentation du seuil Smax pouvant par exemple être réalisée en augmentant le rapport cyclique du signal rectangulaire du courant électrique de commande IC ou en augmentant le seuil haut du signal rectangulaire du courant électrique de commande IC, comme décrit précédemment.

A titre d'exemple, à une température standard fixée à 35°C, la puissance électromagnétique P est pilotée selon des séquences et phases telles que décrites précédemment. Si la température augmente de 5°C, la puissance électromagnétique P est rehaussée de 5 %, et ainsi de suite, jusqu'à ce que la température atteigne 50°C pour établir une puissance maximale entre 50°C et 65°C.

Dans un deuxième cas associé au débit de circulation du liquide, il est à noter que si l'eau circule avec un débit inférieur à un seuil bas donné (correspondant à une phase de non circulation ou de faible circulation de l'eau), l'appareil 1 peut-être mis en veille et réveillé lors des périodes de consommation d'eau (c'est-à-dire lorsque le débit est supérieur au seuil bas).

Par ailleurs, ce paramètre de débit peut influer également sur la fréquence du signal rectangulaire du courant électrique de commande IC. En effet, plus le débit est important et plus il est pertinent d'augmenter la fréquence du signal rectangulaire du courant électrique de commande IC, afin que la portion d'eau en regard de la bobine 2 subisse une quantité de variations du champ électromagnétique significative créé par la bobine.

Autrement dit, l'unité de pilotage 4 peut être paramétrée pour augmenter la fréquence du courant électrique de commande IC lorsque le débit de circulation du liquide augmente ou dépasse un seuil prédéfini.

Dans un troisième cas associé à la dureté du liquide, il est à noter que ce paramètre de dureté va influer sur l'efficacité du processus de détartrage. Ainsi, l'unité de pilotage 4 de l'appareil 1 pourra effectuer une mesure initiale de la dureté de l'eau, avec la sonde mesure concernée, au moment de l'installation, puis de faire des mesures continues au fil du temps.

A titre d'exemple, l'unité de pilotage 4 pourra être enclenchée dans un mode de calibrage automatique, autrement appelé mode « auto-tune », dans lequel l'unité de pilotage 4 fait varier la fréquence du signal rectangulaire du courant électrique de commande IC sur plusieurs périodes successives, comme par exemple :
- sur une première période de plusieurs jours (par exemple 2 jours), la fréquence varie entre 500 Hz et 2400 Hz, avec une mesure de la dureté ; puis
- sur une deuxième période de plusieurs jours (par exemple 2 jours), la fréquence varie entre 2400 Hz et 5000 Hz, avec une mesure de la dureté ; puis
- sur une troisième période de plusieurs jours (par exemple 2 jours), la fréquence varie entre 5000 Hz et 7500 Hz, avec une mesure de la dureté ; et
- sur une quatrième période de plusieurs jours (par exemple 2 jours), la fréquence varie entre 7500 Hz à 10000 Hz, avec une mesure de la dureté.

Il est bien entendu possible de paramétrer, ou modifier, la durée de chaque période. De même, il est possible de paramétrer, ou modifier, la plage de fréquences de chaque période.

Une fois la série de périodes terminées, l'unité de pilotage 4 se recale sur la gamme de fréquence donnant les meilleurs résultats, quel que soit la configuration de l'installation. En effet, sur une installation ancienne donc entartrée, on observe une augmentation de la dureté lors de la phase de détartrage lié à un décollement du tartre des parois internes de la canalisation, donc une augmentation de la dureté pour la meilleure gamme de fréquence puis une diminution de la dureté au fil du temps jusqu'à une valeur plus stable lorsque la tuyauterie est nettoyée.

## Revendications

1. Procédé de traitement du tartre dans une canalisation (C) de circulation d'un liquide, dans lequel est généré un champ magnétique agissant sur le tartre au moyen d'au moins une bobine (2) électrique montée à l'extérieur de la canalisation (C) et parcourue par un courant électrique de commande (IC), ledit procédé consistant à faire varier le courant électrique de commande (IC) pour faire varier la puissance électromagnétique (P) délivrée au liquide selon au moins une série (S1, S2, ..., Sn) de plusieurs séquences répétitives, chaque séquence comprenant successivement :
- une première phase (F1), sur un premier intervalle de temps (T1), dans laquelle la puissance électromagnétique (P) est égale à un seuil maximal (Smax) ;
- une seconde phase (F2), sur un second intervalle de temps (T2), dans laquelle la puissance électromagnétique (P) est égale à un seuil minimal (Pnom) ;
ledit procédé étant **caractérisé en ce qu'**il met en oeuvre plusieurs séries (S1, S2, ..., Sn) successives, avec un abaissement de la valeur du seuil maximal (Smax) pour les premières phases lorsqu'on passe d'une série à une série suivante.

2. Procédé selon la revendication 1, dans lequel, lors de la ou de chaque série (S1, S2, ..., Sn), la puissance électromagnétique (P) présente une forme de signal rectangulaire avec une alternance de premières phases (F1) dans lesquelles la puissance électromagnétique (P) est égale au seuil maximal (Smax) et de secondes phases (F2) dans lesquelles la puissance électromagnétique (P) est égale au seuil minimal (Pnom).

3. Procédé selon les revendications 1 ou 2, dans lequel le rapport entre le premier intervalle de temps (T1) et le second intervalle de temps (T2) est compris entre 0,6 et 1,4, de préférence entre 0,8 et 1,2, et encore de préférence est égal à 1.

4. Procédé selon l'une quelconque des revendications précédentes, dans lequel les séquences sont répétées de manière périodique sur la ou chaque série (S1, S2, ..., Sn).

5. Procédé selon l'une quelconque des revendications précédentes, dans lequel chaque séquence d'une série (S1, S2, ..., Sn) dure entre 0,5 et 8 heures, de préférence entre 1 et 6 heures.

6. Procédé selon l'une quelconque des revendications précédentes, dans lequel la valeur du seuil maximal (Smax) pour les premières phases est abaissée en passant d'une série à une série suivante jusqu'à atteindre la valeur du seuil minimal (Pnom), de sorte que ces séries (S1, S2, ..., Sn) successives sont suivies d'une phase terminale (PT) dans laquelle la puissance électromagnétique (P) délivrée reste constante et égale à la valeur du seuil minimal (Pnom).

7. Procédé selon l'une quelconque des revendications précédentes, dans lequel la ou chaque série (S1, S2, ..., Sn) dure entre un jour et plusieurs jours, de préférence entre 10 et 50 jours, et encore de préférence entre 20 et 40 jours.

8. Procédé selon l'une quelconque des revendications précédentes, dans lequel le courant électrique de commande (IC) est un signal rectangulaire, notamment un signal de fréquence variable comprise entre 500 Hz et 11 kHz, alternant entre un seuil haut et un seuil bas.

9. Procédé selon la revendication 8, dans lequel, pour la ou chaque série (S1, S2, ..., Sn), le courant électrique de commande (IC) présente un rapport cyclique qui varie entre la première phase (F1) et la seconde phase (F2), avec un rapport cyclique durant la première phase (F1) supérieur au rapport cyclique durant la seconde phase (F2), et dans lequel, d'une série à une série suivante, le rapport cyclique durant les premières phases diminue.

10. Procédé selon la revendication 8, dans lequel, pour la ou chaque série (S1, S2, ..., Sn), le courant électrique de commande (IC) présente un seuil haut qui varie entre la première phase (F1) et la seconde phase (F2), avec un seuil haut durant la première phase (F1) supérieur au seuil haut durant la seconde phase (F2), et dans lequel, d'une série à une série suivante, le seuil haut durant les premières phases diminue.

11. Procédé selon l'une quelconque des revendications précédentes, comprenant en outre une étape de mesure de la température contre la canalisation (C), suivie d'une étape de génération d'une alarme (AL) si la température mesurée sort d'une plage de température prédéfinie.

12. Procédé selon l'une quelconque des revendications précédentes, comprenant en outre :
- une étape de mesure de mesure d'au moins un paramètre intrinsèque du liquide circulant dans la canalisation (C), choisi dans la liste de paramètres comprenant la température du liquide, la dureté du liquide, le pH du liquide, le taux de chlore dans le liquide, le débit de circulation du liquide, la pression du liquide, et la conductivité du liquide ; et
- une étape de variation de la puissance électromagnétique (P) en fonction de la mesure d'au moins un paramètre intrinsèque.

13. Procédé selon la revendication 12, dans lequel un paramètre intrinsèque correspond à la température de l'eau, et l'étape de variation consiste à augmenter le seuil maximal (Smax) de la puissance électromagnétique (P) lorsque ladite température augmente ou dépasse un seuil de température prédéfini.

14. Procédé selon les revendications 8 et 12, dans lequel un paramètre intrinsèque correspond à la dureté du liquide, et l'étape de variation consiste à faire varier la fréquence du signal rectangulaire du courant électrique de commande (IC) sur plusieurs périodes successives, en augmentant la fréquence ou gamme de fréquences d'une période à la suivante, puis à recaler la fréquence ou gamme de fréquences dudit signal rectangulaire sur celle correspondant à la période où la dureté du liquide est maximale.

15. Appareil de traitement du tartre dans une canalisation (C) de circulation d'un liquide, comprenant :
- au moins une bobine (2) électrique prévue pour être montée à l'extérieur de la canalisation (C) ;
- une alimentation (3) électrique ;
- une unité de pilotage (4) raccordée en entrée à l'alimentation et en sortie à la ou chaque bobine (2), ladite unité de pilotage (4) générant en sortie un courant électrique de commande (IC) parcourant la ou chaque bobine (2) ;
où l'unité de pilotage (4) comprend un module de variation (5) du courant électrique de commande (IC) pour faire varier la puissance électromagnétique (P) délivrée par la ou chaque bobine (2) selon au moins une série (S1, S2, ..., Sn) de plusieurs séquences répétitives, chaque séquence comprenant successivement :
- une première phase (F1), sur un premier intervalle de temps (T1), dans laquelle la puissance électromagnétique (P) est égale à un seuil maximal (Smax) ;
- une seconde phase (F2), sur un second intervalle de temps (T2), dans laquelle la puissance électromagnétique (P) est égale à un seuil minimal (Pnom) ;
ledit système étant **caractérisé en ce que** l'unité de pilotage (4) est conçu pour mettre en oeuvre plusieurs séries (S1, S2, ..., Sn) successives, avec un abaissement de la valeur du seuil maximal (Smax) pour les premières phases lorsqu'on passe d'une série à une série suivante.

## Patentansprüche

1. Verfahren zum Behandeln von Kalkablagerungen in einer Kanalisation (C) zur Zirkulation einer Flüssigkeit, wobei ein Magnetfeld erzeugt wird, das anhand zumindest einer elektrischen Spule (2) auf die Kalkablagerungen einwirkt, die außen an der Kanalisation (C) montiert ist, und von einem elektrischen Steuerstrom (IC) durchflossen wird, wobei das besagte Verfahren darin besteht, den elektrischen Steuerstrom (IC) variieren zu lassen, um die elektromagnetische Leistung (P) variieren zu lassen, die in zumindest einer Reihe (S1, S2, ..., Sn) von mehreren repetitiven Sequenzen auf die Flüssigkeit abgegeben wird, wobei jede Sequenz nacheinander Folgendes umfasst:
- eine erste Phase (F1) in einem ersten Zeitintervall (T1), in der die elektromagnetische Leistung (P) gleich einem maximalen Grenzwert (Smax) ist;
- eine zweite Phase (F2) in einem zweiten Zeitintervall (T2), in der die elektromagnetische Leistung (P) gleich einem minimalen Grenzwert (Pnom) ist;
wobei das besagte Verfahren **dadurch gekennzeichnet ist, dass** es mehrere aufeinanderfolgende Reihen (S1, S2, ..., Sn) anwendet, mit einer Senkung des Werts des maximalen Grenzwerts (Smax) in den ersten Phasen, wenn man von einer Reihe auf eine nächste Reihe übergeht.

2. Verfahren nach Anspruch 1, wobei die elektromagnetische Leistung (P) bei der oder bei jeder Reihe (S1, S2, ..., Sn) eine rechteckige Signalform mit einer Abwechslung von ersten Phasen (F1) aufweist, bei denen die elektromagnetische Leistung (P) gleich dem maximalen Grenzwert (Smax) ist, und von zweiten Phasen (F2), bei denen die elektromagnetische Leistung (P) gleich dem minimalen Grenzwert (Pnom) ist.

3. Verfahren nach den Ansprüchen 1 oder 2, wobei das Verhältnis zwischen dem ersten Zeitintervall (T1) und dem zweiten Zeitintervall (T2) zwischen 0,6 und 1,4, vorzugsweise zwischen 0,8 und 1,2 liegt, und noch besser gleich 1 ist.

4. Verfahren nach einem der vorherigen Ansprüche, wobei die Sequenzen in periodischer Form in der oder in jeder Reihe (S1, S2, ..., Sn) wiederholt werden.

5. Verfahren nach einem der vorherigen Ansprüche, wobei jede Sequenz einer Reihe (S1, S2, ..., Sn) zwischen 0,5 und 8 Stunden, vorzugsweise zwischen 1 und 6 Stunden dauert.

6. Verfahren nach einem der vorherigen Ansprüche, wobei der Wert des maximalen Grenzwerts (Smax) für die ersten Phasen gesenkt wird, indem man von einer Reihe auf eine nächste Reihe übergeht, bis man den Wert des minimalen Grenzwerts (Pnom) erreicht, sodass auf diese aufeinanderfolgenden Reihen (S1, S2, ..., Sn) eine abschließende Phase (PT) folgt, in der die abgegebene elektromagnetische Leistung (P) konstant und gleich dem Wert des minimalen Grenzwerts (Pnom) bleibt.

7. Verfahren nach einem der vorherigen Ansprüche, wobei die oder jede Reihe (S1, S2, ..., Sn) zwischen einem Tag und mehreren Tagen, vorzugsweise zwischen 10 und 50 Tage, und noch besser zwischen 20 und 40 Tage dauert.

8. Verfahren nach einem der vorherigen Ansprüche, wobei der elektrische Steuerstrom (IC) ein rechteckiges Signal, vor allem ein Signal mit einer variablen Frequenz zwischen 500 Hz und 11 kHz ist, das sich zwischen einem oberen Grenzwert und einem unteren Grenzwert abwechselt.

9. Verfahren nach Anspruch 8, wobei der elektrische Steuerstrom (IC) für die oder jede Reihe (S1, S2, ..., Sn) ein zyklisches Verhältnis aufweist, das zwischen der ersten Phase (F1) und der zweiten Phase (F2) variiert, mit einem zyklischen Verhältnis während der ersten Phase (F1) größer als das zyklische Verhältnis während der zweiten Phase (F2), und wobei sich von einer Reihe zu einer nächsten Reihe das zyklische Verhältnis während der ersten Phasen verringert.

10. Verfahren nach Anspruch 8, wobei der elektrische Steuerstrom (IC) für die oder jede Reihe (S1, S2, ..., Sn) einen oberen Grenzwert aufweist, der zwischen der ersten Phase (F1) und der zweiten Phase (F2) variiert, mit einem oberen Grenzwert während der ersten Phase (F1) größer als der obere Grenzwert während der zweiten Phase (F2), und wobei sich von einer Reihe zu einer nächsten Reihe der obere Grenzwert während der ersten Phasen verringert.

11. Verfahren nach einem der vorherigen Ansprüche, darüber hinaus einen Schritt zum Messen der Temperatur an der Kanalisation (C) umfassend, gefolgt von einem Schritt zum Erzeugen eines Alarms (AL), wenn die gemessene Temperatur einen vorbestimmten Temperaturbereich verlässt.

12. Verfahren nach einem der vorherigen Ansprüche, darüber hinaus Folgendes umfassend:
- einen Messschritt zum Messen zumindest eines intrinsischen Parameters der Flüssigkeit, die durch die Kanalisation (C) zirkuliert, der aus der Liste an Parametern ausgewählt wird, welche die Temperatur der Flüssigkeit, die Härte der Flüssigkeit, den pH-Wert der Flüssigkeit, den Chlorgehalt der Flüssigkeit, den Volumenstrom der Flüssigkeit, den Druck der Flüssigkeit, und die Leitfähigkeit der Flüssigkeit umfasst; und
- einen Schritt zum Variieren der elektromagnetischen Leistung (P) in Abhängigkeit von der Messung zumindest eines intrinsischen Parameters.

13. Verfahren nach Anspruch 12, wobei ein intrinsischer Parameter der Temperatur des Wassers entspricht, und der Schritt zum Variieren darin besteht, den maximalen Grenzwert (Smax) der elektromagnetischen Leistung (P) zu erhöhen, wenn die besagte Temperatur ansteigt oder einen vorbestimmten Temperaturbereich verlässt.

14. Verfahren nach den Ansprüchen 8 und 12, wobei ein intrinsischer Parameter der Härte der Flüssigkeit entspricht, und der Schritt zum Variieren darin besteht, die Frequenz des rechteckigen Signals des elektrischen Steuerstroms (IC) in mehreren aufeinanderfolgenden Perioden variieren zu lassen, indem man die Frequenz oder die Frequenzspanne von einer Periode zur nächsten erhöht, und die Frequenz oder die Frequenzspanne des besagten rechteckigen Signals danach wieder jener anpasst, die der Periode entspricht, in der die Härte der Flüssigkeit maximal ist.

15. Gerät zum Behandeln von Kalkablagerungen in einer Kanalisation (C) zur Zirkulation einer Flüssigkeit, Folgendes umfassend:
- zumindest eine elektrische Spule (2), die vorgesehen ist, um außen an der Kanalisation (C) montiert zu werden;
- eine Stromversorgung (3);
- eine Steuereinheit (4), die am Eingang an die Versorgung und am Ausgang an die oder jede Spule (2) angeschlossen ist, wobei die besagte Steuereinheit (4) am Ausgang einen elektrischen Steuerstrom (IC) erzeugt, der durch die oder jede Spule (2) fließt;
wobei die Steuereinheit (4) ein Modul zum Regeln (5) des elektrischen Steuerstroms (IC) umfasst, um die elektromagnetische Leistung (P) variieren zu lassen, die von der oder jeder Spule (2) gemäß zumindest einer Reihe (S1, S2, ..., Sn) von mehreren repetitiven Sequenzen abgegeben wird, wobei jede Sequenz nacheinander Folgendes umfasst:
- eine erste Phase (F1) in einem ersten Zeitintervall (T1), in der die elektromagnetische Leistung (P) gleich einem maximalen Grenzwert (Smax) ist;
- eine zweite Phase (F2) in einem zweiten Zeitintervall (T2), in der die elektromagnetische Leistung (P) gleich einem minimalen Grenzwert (Pnom) ist;
wobei das besagte System **dadurch gekennzeichnet ist, dass** die Steuereinheit (4) gestaltet ist, um mehrere aufeinanderfolgende Reihen (S1, S2, ..., Sn) anzuwenden, mit einer Senkung des maximalen Grenzwerts (Smax) in den ersten Phasen, wenn man von einer Reihe auf eine nächste Reihe übergeht.

## Claims

1. A method for treating scale in a liquid circulation pipe (C), wherein is generated a magnetic field acting on the scale by means of at least one electric coil (2) mounted outside the pipe (C) and traversed by a control electric current (IC), said method consisting of varying the control electric current (IC) for varying the electromagnetic power (P) delivered to the liquid according to at least one series (S1, S2, ..., Sn) of several repetitive sequences, each sequence comprising successively:
- a first phase (F1), on a first time slot (T1), wherein the electromagnetic power (P) is equal to a maximum threshold (Smax);
- a second phase (F2), on a second time slot (T2), wherein the electromagnetic power (P) is equal to a minimum threshold (Pnom);
said method being **characterized in that** it implements several successive series (S1, S2, ..., Sn), with a lowering of the maximum threshold value (Smax) for the first phases when passing from one series to a next series.

2. The method according to claim 1, wherein, during the or each series (S1, S2, ..., Sn), the electromagnetic power (P) has a form of rectangular signal with an alternation of first phases (F1) wherein the electromagnetic power (P) is equal to the maximum threshold (Smax) and of second phases (F2) wherein the electromagnetic power (P) is equal to the minimum threshold (Pnom).

3. The method according to claims 1 or 2, wherein the ratio between the first time slot (T1) and the second time slot (T2) is comprised between 0.6 and 1.4, preferably between 0.8 and 1.2, and more preferably is equal to 1.

4. The method according to any one of the preceding claims, wherein the sequences are repeated periodically on the or each series (S1, S2, ..., Sn).

5. The method according to any one of the preceding claims, wherein each sequence of a series (S1, S2, ..., Sn) lasts between 0.5 and 8 hours, preferably between 1 and 6 hours.

6. The method according to any one of the preceding claims, wherein the value of the maximum threshold (Smax) for the first phases is lowered by passing from one series to a next series until reaching the value of the minimum threshold (Pnom), so that these successive series (S1, S2, ..., Sn) are followed by a terminal phase (PT) wherein the delivered electromagnetic power (P) remains constant and equal to the value of the minimum threshold (Pnom).

7. The method according to any one of the preceding claims, wherein the or each series (S1, S2, ..., Sn) lasts between one day and several days, preferably between 10 and 50 days, and more preferably between 20 and 40 days.

8. The method according to any one of the preceding claims, wherein the control electric current (IC) is a rectangular signal, in particular a variable frequency signal comprised between 500 Hz and 11 kHz, alternating between a high threshold and a low threshold .

9. The method according to claim 8, wherein, for the or each series (S1, S2, ..., Sn), the control electric current (IC) has a cyclic ratio which varies between the first phase (F1) and the second phase (F2), with a cyclic ratio during the first phase (F1) greater than the cyclic ratio during the second phase (F2), and wherein, from one series to a next series, the cyclic ratio during the first phases decreases.

10. The method according to claim 8, wherein, for the or each series (S1, S2, ..., Sn), the control electric current (IC) has a high threshold which varies between the first phase (F1) and the second phase (F2), with a high threshold during the first phase (F1) greater than the high threshold during the second phase (F2), and wherein, from one series to a next series, the high threshold during the first phases decreases.

11. The method according to any one of the preceding claims, further comprising a step of measuring the temperature against the pipe (C), followed by a step of generating an alarm (AL) if the measured temperature falls outside a predefined temperature range.

12. The method according to any one of the preceding claims, further comprising:
- a step of measuring at least one intrinsic parameter of the liquid circulating in the pipe (C), selected from the list of parameters comprising the temperature of the liquid, the hardness of the liquid, the pH of the liquid, the chlorine level in the liquid, the liquid circulation rate, the pressure of the liquid, and the conductivity of the liquid; and
- a step of varying the electromagnetic power (P) depending on the measurement of at least one intrinsic parameter.

13. The method according to claim 12, wherein an intrinsic parameter corresponds to the temperature of water, and the varying step consists of increasing the maximum threshold (Smax) of the electromagnetic power (P) when said temperature increases or exceeds a predefined temperature threshold.

14. The method according to claims 8 and 12, wherein an intrinsic parameter corresponds to the hardness of the liquid, and the varying step consists of varying the frequency of the rectangular signal of the control electric current (IC) over several successive periods, by increasing the frequency or range of frequencies from one period to the next, and then resetting the frequency or range of frequencies of said rectangular signal on the frequency or range of frequencies corresponding to the period where the hardness of the liquid is maximum.

15. An apparatus for treating the scale in a liquid circulation pipe (C), comprising:
- at least one electric coil (2) provided to be mounted outside the pipe (C);
- an electrical supply (3);
- a drive unit (4) connected at the inlet to the supply and at the outlet to the or each coil (2), said drive unit (4) generating at the outlet a control electric current (IC) traversing the or each coil (2);
where the drive unit (4) comprises a variation module (5) of the control electric current (IC) for varying the electromagnetic power (P) delivered by the or each coil (2) according to at least one series (S1, S2, ..., Sn) of several repetitive sequences, each sequence comprising successively:
- a first phase (F1), on a first time slot (T1), wherein the electromagnetic power (P) is equal to a maximum threshold (Smax);
- a second phase (F2), on a second time slot (T2), wherein the electromagnetic power (P) is equal to a minimum threshold (Pnom);
said system being **characterized in that** the drive unit (4) is designed to implement several successive series (S1, S2, ..., Sn), with a lowering of the value of the maximum threshold (Smax) for the first phases when passing from one series to a next series.
